# EUROPEAN PATENT APPLICATION

(11) **EP 4 361 316 A2**
(43) Date of publication of application: **01.05.2024**
(21) Application number: 23191977.0
(22) Date of filing: 17.08.2023
(51) Int. Cl.: C25B 1/04, C25B 9/63, C25B 9/75, C25B 9/77, C25B 15/08

(54) **WATER ELECTROLYSIS CELL**

(30) Priority: 26.10.2022 JP 2022171109
(71) Applicant: TOYOTA JIDOSHA KABUSHIKI KAISHA, Toyota-shi, Aichi-ken, 471 8571 (JP)
(72) Inventor: SHIBATA, Kazunori, Toyota-shi, 471-8571 (JP); FUJITA, Keisuke, Toyota-shi, 471-8571 (JP); YOSHIMURA, Joji, Toyota-shi, 471-8571 (JP)
(74) Representative: J A Kemp LLP

(57) **Abstract**

A water electrolysis cell (100) includes an anode-side porous channel (10), a membrane electrode assembly (23), a cathode-side porous channel (30), and a separator (40) disposed on at least any one of a side of the anode-side porous channel (10) opposite to the membrane electrode assembly (23) side and a side of the cathode-side porous channel (30) opposite to the membrane electrode assembly (23) side. The anode-side porous channel (10), the membrane electrode assembly (23), and the cathode-side porous channel (30) are provided in this order. The membrane electrode assembly (23) includes an anode catalyst layer, an electrolyte membrane, and a cathode catalyst layer in order from the anode-side porous channel (10) side. An area in a plane direction of the anode-side porous channel (10) is greater than an area in the plane direction of the cathode-side porous channel (30) in a plan view.

## Description

### BACKGROUND OF THE INVENTION

### 1. Field of the Invention

The disclosure relates to a water electrolysis cell.

### 2. Description of Related Art

Various researches on water electrolysis apparatuses have been conducted. For example, Japanese Unexamined Patent Application Publication No. 2012-117140 (JP 2012-117140 A) describes a technology for, even when a positive pressure is applied from a hydrogen-side current collector to an oxygen-side current collector, capable of receiving the entire pressure with a surface of the oxygen-side current collector via a solid polymer electrolyte membrane by increasing the size of the oxygen-side current collector as compared to the hydrogen-side current collector. Japanese Unexamined Patent Application Publication No. 2017-210646 (JP 2017-210646 A) describes a technology for sandwiching an electrolyte membrane with an anode power supply made up of a porous electric conductor and a cathode power supply made up of a porous electric conductor.

### SUMMARY OF THE INVENTION

JP 2012-117140 A does not describe a pressure-resistant device for members disposed outside the current collectors. If the current collectors cannot be supported by a member disposed outside the current collectors, a deformation of the current collectors may occur.

The disclosure provides a water electrolysis cell capable of improving pressure resistance.

An aspect of the disclosure provides a water electrolysis cell. The water electrolysis cell includes an anode-side porous channel, a membrane electrode assembly, a cathode-side porous channel, and a separator disposed on at least any one of a side of the anode-side porous channel opposite to the membrane electrode assembly side and a side of the cathode-side porous channel opposite to the membrane electrode assembly side. The anode-side porous channel, the membrane electrode assembly, and the cathode-side porous channel are provided in this order. The membrane electrode assembly includes an anode catalyst layer, an electrolyte membrane, and a cathode catalyst layer in order from the anode-side porous channel side. An area in a plane direction of the anode-side porous channel is greater than an area in the plane direction of the cathode-side porous channel in a plan view.

The water electrolysis cell according to the above aspect may further include an anode-side supply hole, a cathode-side supply hole, an anode-side exhaust hole, and a cathode-side exhaust hole at ends in the plane direction and in a region in which the membrane electrode assembly is not present in the plan view. The anode-side porous channel may connect the anode-side supply hole with the anode-side exhaust hole. The cathode-side porous channel may connect the cathode-side supply hole with the cathode-side exhaust hole.

In the water electrolysis cell according to the above aspect, the anode-side porous channel and the cathode-side porous channel each may be made up of a metal porous member.

The water electrolysis cell according to the above aspect may further include an anode-side gas diffusion layer disposed between the anode-side porous channel and the anode catalyst layer, and a cathode-side gas diffusion layer disposed between the cathode-side porous channel and the cathode catalyst layer. The area in the plane direction of the anode-side porous channel may be greater than an area in the plane direction of the anode-side gas diffusion layer. The area in a plane direction of the cathode-side porous channel may be less than an area in the plane direction of the cathode-side gas diffusion layer. The area in the plane direction of the anode-side gas diffusion layer may be greater than the area in the plane direction of the cathode-side gas diffusion layer, and an edge of the anode-side gas diffusion layer may be located outside an edge of the cathode-side gas diffusion layer over an entire circumference in the plan view.

The water electrolysis cell according to the above aspect may further include a first frame having a first opening that accommodates the anode-side porous channel, a second frame having a second opening that accommodates the membrane electrode assembly, and a third frame having a third opening that accommodates the cathode-side porous channel. The first frame may have a first anode-side supply hole, a first cathode-side supply hole, a first anode-side exhaust hole, and a first cathode-side exhaust hole at ends in the plane direction and in a region in which the membrane electrode assembly is not present in the plan view. The second frame may have a second anode-side supply hole, a second cathode-side supply hole, a second anode-side exhaust hole, and a second cathode-side exhaust hole at the ends in the plane direction and in the region in which the membrane electrode assembly is not present in the plan view. The third frame may have a third anode-side supply hole, a third cathode-side supply hole, a third anode-side exhaust hole, and a third cathode-side exhaust hole at the ends in the plane direction and in the region in which the membrane electrode assembly is not present in the plan view. The anode-side porous channel may connect the first anode-side supply hole of the first frame with the first anode-side exhaust hole of the first frame in the plan view. The cathode-side porous channel may connect the third cathode-side supply hole of the third frame with the third cathode-side exhaust hole of the third frame in the plan view.

With the water electrolysis cell according to the aspect of the disclosure, pressure resistance is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic perspective view of an example of a water electrolysis cell according to an embodiment of the disclosure;
FIG. 2 is a schematic sectional view of the water electrolysis cell, taken along the line II-II in FIG. 1; and
FIG. 3 is a schematic plan view of an example of some of constituent members of the water electrolysis cell according to the embodiment of the disclosure.

### DETAILED DESCRIPTION OF EMBODIMENTS

Hereinafter, an embodiment of the disclosure will be described. In the specification, a matter, other than a matter specifically referred to, but needed to implement the disclosure (for example, general components and manufacturing processes of a water electrolysis cell, not characterizing the disclosure) can be regarded as a design matter of a person skilled in the art based on an existing art in the field. The disclosure can be implemented based on the content described in the specification and a common technical knowledge in the field. A dimensional relationship (length, width, thickness, and the like) in the drawings does not always reflect an actual dimensional relationship. In the specification, "X to Y" that indicates a numeric range is used to mean that the numeric values X and Y are respectively included as a lower limit and an upper limit. A selected combination of an upper limit and a lower limit in the numeric range may be adopted.

The embodiment of the disclosure provides a water electrolysis cell. The water electrolysis cell includes an anode-side porous channel, a membrane electrode assembly, and a cathode-side porous channel in this order. The water electrolysis cell further includes a separator disposed on at least any one of a side of the anode-side porous channel opposite to the membrane electrode assembly side and a side of the cathode-side porous channel opposite to the membrane electrode assembly side. The membrane electrode assembly includes an anode catalyst layer, an electrolyte membrane, and a cathode catalyst layer in order from the anode-side porous channel side. An area in a plane direction of the anode-side porous channel is greater than an area in the plane direction of the cathode-side porous channel in a plan view.

In the structure of the water electrolysis cell, when a material that tends to form a gap depending on a structure formed by pressing, such as a metal separator, is applied at the time of designing pressure resistance, the separator deforms due to a differential pressure between a pressure applied to a fuel electrode and a pressure applied to an air electrode and a total pressure applied to the water electrolysis cell, so it is difficult to ensure pressure-resistant performance. If there is a gap when the differential pressure occurs, a member on a low-pressure side, pushed from a high-pressure side, receives damage due to a local bending stress, a local tensile stress, and the like, caused by pressure if there is no support body, which causes gas leakage. In other words, the gap present at the time when the differential pressure is applied from the high-pressure side to the low-pressure side generates a stress, so a structure that minimizes the gap is desirable. In addition, there occurs a space in a region of a fluid inlet part and a fluid outlet part that are respectively adjacent to holes serving as manifolds, so a structure that does not cause a wide gap is desirable.

In the water electrolysis cell according to the embodiment of the disclosure, a porous (including 3D fine mesh) channel is disposed on a fuel electrode side, another porous (including 3D fine mesh) channel is disposed on an air electrode side. Thus, the porous channels are formed in a region from the fluid inlet part via the membrane electrode assembly to the fluid outlet part in a plan view. When the porous channels are formed in the region of the fluid inlet part and the fluid outlet part, occurrence of a space in the region of the fluid inlet part and the fluid outlet part is suppressed. Thus, a gap that is formed in the structure of the water electrolysis cell is minimized, with the result that pressure resistance to a total pressure applied to the water electrolysis cell is enhanced. In the water electrolysis cell according to the embodiment of the disclosure, when the water electrolysis cell is designed in consideration of a water-resistant structure using a separator and a frame, a gap between constituent members is minimized by reducing the size of a constituent member on the fuel electrode side where the pressure is high and increasing the size of a constituent member on the air electrode side where the pressure is low. Thus, a differential pressure stress generated at the gap is reduced. Since no gap is provided on the air electrode side where the pressure is low, engagement of the member in the gap from the fuel electrode side where the pressure is high to the air electrode side where the pressure is low is reduced.

The water electrolysis cell according to the embodiment of the disclosure produces oxygen from an anode (air electrode) and hydrogen from a cathode (fuel electrode) by electrolysis of water supplied to the anode (air electrode) as follows.
Anode:

   H₂O -> 2H⁺ + 1/2O₂ + 2e⁻
Cathode:

   2H⁺ + 2e⁻ -> H₂

In the water electrolysis cell according to the embodiment of the disclosure, a pressure at the fuel electrode in the water electrolysis cell may be higher than a pressure at the air electrode. The water electrolysis cell may be a water electrolysis cell stack that is a stack made up of a plurality of the water electrolysis cells stacked. The number of the water electrolysis cells stacked is not limited and may be, for example, two to several hundreds.

The water electrolysis cell includes an anode-side porous channel, a membrane electrode assembly (MEA), and a cathode-side porous channel in this order.

The membrane electrode assembly includes an anode catalyst layer, an electrolyte membrane, and a cathode catalyst layer in this order.

In the embodiment of the disclosure, the cathode (fuel electrode) includes the cathode catalyst layer. In the embodiment of the disclosure, the anode (air electrode) includes the anode catalyst layer.

The cathode catalyst layer and the anode catalyst layer are collectively referred to as catalyst layers. Each of the catalyst layers may include, for example, a catalyst metal that facilitates water electrolysis, an electrolyte that has proton conductivity, a carrier that has electron conductivity, and the like. Examples of the catalyst metal include iridium (Ir), iridium dioxide (IrO₂), ruthenium (Ru), platinum (Pt), and alloys consisting of Pt and another metal (for example, Pt alloys that mixedly contain cobalt, nickel, and the like). For the anode catalyst layer, examples of the catalyst metal may include Ir, IrO₂, and Ru. For the cathode catalyst layer, examples of the catalyst metal may include Pt and Pt alloys. Examples of the electrolyte may include fluororesins. Examples of the fluororesins may include Nafion solution. The catalyst metal may be supported on a carrier. In each catalyst layer, a carrier supporting a catalyst metal (catalyst support carrier) and the electrolyte may be mixedly provided. Examples of the carrier for supporting a catalyst metal include carbon materials, such as generally commercially available carbon.

The electrolyte membrane is sandwiched by two catalyst layers. One of the two catalyst layers is the cathode catalyst layer, and the other is the anode catalyst layer. The electrolyte membrane may be a solid polymer electrolyte membrane. Examples of the solid polymer electrolyte membrane include a fluorine polymer electrolyte membrane, such as a thin film of perfluorosulfonate containing moisture, and a hydrocarbon polymer electrolyte membrane. Examples of the electrolyte membrane may include a Nafion membrane (produced by Du Pont).

The anode-side porous channel and the cathode-side porous channel are collectively referred to as porous channels. The porous channel may have a gas permeability, that is, the porous channel may be made up of an electrically conductive member or the like having pores. Examples of the electrically conductive member include a carbon porous body, such as carbon cloth and carbon paper, and a metal porous member, such as 3D fine mesh, metal mesh, and foam metal. Each of the anode-side porous channel and the cathode-side porous channel may be made up of a metal porous member. The porous channel may have pores with one to several hundreds of micrometers. The porous channel may have the function of a gas diffusion layer.

An anode-side gas diffusion layer may be disposed between the anode-side porous channel and the anode catalyst layer. A cathode-side gas diffusion layer may be disposed between the cathode-side porous channel and the cathode catalyst layer. The anode-side gas diffusion layer and the cathode-side gas diffusion layer are collectively referred to as gas diffusion layers. The gas diffusion layer may be an electrically conductive member or the like illustrated in relation to the porous channel. The anode-side gas diffusion layer, the membrane electrode assembly, and the cathode-side gas diffusion layer are collectively referred to as membrane electrode gas diffusion layer assembly (MEGA).

The water electrolysis cell may include a first frame having a first opening that accommodates the anode-side porous channel, a second frame having a second opening that accommodates the membrane electrode assembly or the membrane electrode gas diffusion layer assembly, and a third frame having a third opening that accommodates the cathode-side porous channel. The first frame, the second frame, and the third frame may be collectively referred to as frame. The opening of each frame may be provided at the center of the frame. The first opening has a greater area in a plane direction than the third opening that accommodates the cathode-side porous channel in a plan view. The area in the plane direction of the second opening may be equal to the area in the plane direction of the first opening or may be equal to the area in the plane direction of the third opening. The area in the plane direction of the second opening may be less than the area in the plane direction of the first opening and greater than the area in the plane direction of the third opening in a plan view.
The shape of a peripheral part of the second opening of the second frame may be a shape that fits to the shape of the membrane electrode assembly or the shape of the membrane electrode gas diffusion layer assembly. When the shape of the membrane electrode assembly or the shape of the membrane electrode gas diffusion layer assembly has a stepwise shape, the shape of the peripheral part of the second opening may have a stepwise shape such that the membrane electrode assembly having the stepwise shape or the membrane electrode gas diffusion layer assembly having the stepwise shape fits to the shape of the peripheral part of the second opening. The second frame may be a composite frame in which frames respectively having openings adapted to the shapes of the corresponding members that make up the membrane electrode assembly or the membrane electrode gas diffusion layer assembly are stacked. When, for example, the second frame accommodates the membrane electrode gas diffusion layer assembly and the area in the plane direction of a composite body of the anode-side gas diffusion layer and the membrane electrode assembly is greater than the area in the plane direction of the cathode-side gas diffusion layer, the second frame may be formed by stacking a fourth frame having a fourth opening adapted to the shape of the composite body and a fifth frame having a fifth opening adapted to the shape of the cathode-side gas diffusion layer are stacked.

The water electrolysis cell may include holes serving as manifolds such as an anode-side supply hole, a cathode-side supply hole, an anode-side exhaust hole, and a cathode-side exhaust hole at ends in the plane direction and in a region in which the membrane electrode assembly is not present in the plan view. The frame may have holes serving as manifolds such as the anode-side supply hole, the cathode-side supply hole, the anode-side exhaust hole, and the cathode-side exhaust hole at ends in the plane direction and in a region in which no membrane electrode assembly is present in the plan view. In other words, the first frame has a first anode-side supply hole, a first cathode-side supply hole, a first anode-side exhaust hole, and a first cathode-side exhaust hole at the ends in the plane direction and in the region in which the membrane electrode assembly is not present in the plan view. The second frame has a second anode-side supply hole, a second cathode-side supply hole, a second anode-side exhaust hole, and a second cathode-side exhaust hole at the ends in the plane direction and in the region in which the membrane electrode assembly is not present in the plan view. The third frame has a third anode-side supply hole, a third cathode-side supply hole, a third anode-side exhaust hole, and a third cathode-side exhaust hole at the ends in the plane direction and in the region in which the membrane electrode assembly is not present in the plan view. The anode-side supply hole, the cathode-side supply hole, the anode-side exhaust hole, and the cathode-side exhaust hole of the first frame, the anode-side supply hole, the cathode-side supply hole, the anode-side exhaust hole, and the cathode-side exhaust hole of the second frame, and the anode-side supply hole, the cathode-side supply hole, the anode-side exhaust hole, and the cathode-side exhaust hole of the third frame, respectively, may be aligned so as to communicate with one another. In other words, the first anode-side supply hole, the second anode-side supply hole, and the third anode-side supply hole may be aligned so as to communicate with one another. The first anode-side exhaust hole, the second anode-side exhaust hole, and the third anode-side exhaust hole may be aligned so as to communicate with one another. The first cathode-side supply hole, the second cathode-side supply hole, and the third cathode-side supply hole may be aligned so as to communicate with one another. The first cathode-side exhaust hole, the second cathode-side exhaust hole, and the third cathode-side exhaust hole may be aligned so as to communicate with one another. The first anode-side supply hole, the first opening, and the first anode-side exhaust hole of the first frame may communicate with one another in the plane direction in the plan view to form one communication hole. The third cathode-side supply hole, the third opening, and the third cathode-side exhaust hole of the third frame may communicate with one another in the plane direction in the plan view to form one communication hole.

The frame may be a structural member having adhesion properties, gas seal properties, and electrically insulating properties. The material of the frame may be, for example, a thermoplastic resin, such as polyesters and modified olefins, or may be a thermosetting resin that is a modified epoxy resin. The material of the frame may be a rubber material having an elastic function, such as an ethylene propylene diene rubber (EPDM), a fluorine rubber, and a silicon rubber. The thickness of the frame may be greater than or equal to 5 µm or may be greater than or equal to 20 µm from the viewpoint of ensuring electrically insulating properties, and may be less than or equal to 200 µm or may be less than or equal to 150 µm from the viewpoint of reducing the thickness of the water electrolysis cell. The first frame, the second frame, and the third frame may be made of a resin of the same type or may be made of resins of different types. Each of the first frame, the second frame, and the third frame may have an adhesion function. At least one of the first frame, the second frame, and the third frame may have an elastic function.

The anode-side porous channel may connect the anode-side supply hole with the anode-side exhaust hole. The cathode-side porous channel may connect the cathode-side supply hole with the cathode-side exhaust hole. Specifically, the anode-side porous channel may connect the first anode-side supply hole of the first frame with the first anode-side exhaust hole of the first frame in the plan view. The cathode-side porous channel may connect the third cathode-side supply hole of the third frame with the third cathode-side exhaust hole of the third frame in the plan view.

The water electrolysis cell includes a separator on at least any one of a side of the anode-side porous channel opposite to the membrane electrode assembly side and a side of the cathode-side porous channel opposite to the membrane electrode assembly side. The water electrolysis cell may include an anode separator on a side of the anode-side porous channel opposite to the membrane electrode assembly side. The water electrolysis cell may include a cathode separator on a side of the cathode-side porous channel opposite to the membrane electrode assembly side. The anode separator and the cathode separator are collectively referred to as separators. The separator may have holes serving as manifolds, such as supply holes and exhaust holes for flowing fluids such as reaction water, oxygen, hydrogen, and cooling medium in a stacking direction of the water electrolysis cell. Water or the like may be used as reaction water and cooling medium. The supply holes include an anode supply hole, a cathode supply hole, a cooling medium supply hole, and the like. The exhaust holes include an anode exhaust hole, a cathode exhaust hole, a cooling medium exhaust hole, and the like. The separator may have channels for reaction fluids such as reaction water, oxygen, and hydrogen on a surface that is in contact with the gas diffusion layer. The separator may have channels for cooling medium for keeping the temperature of the water electrolysis cell constant on a surface opposite to the surface that is in contact with the gas diffusion layer. The separator may be a flat plate having no channels for reaction fluids or no channels for cooling medium. The anode separator may have channels for anode fluids such as reaction water and oxygen on a surface that is in contact with the anode-side porous channel. The anode separator may have channels for cooling medium for keeping the temperature of the water electrolysis cell constant on a surface opposite to the surface that is in contact with the anode-side porous channel. The anode separator may be a flat plate having no channels for anode fluids or no channels for cooling medium. The cathode separator may have channels for cathode fluids such as hydrogen on a surface that is in contact with the cathode-side porous channel. The cathode separator may have channels for cooling medium for keeping the temperature of the water electrolysis cell constant on a surface opposite to the surface that is in contact with the cathode-side porous channel. The cathode separator may be a flat plate having no channels for cathode fluids or no channels for cooling medium. The separator may be a gas-impermeable electrically conductive member or the like. Examples of the gas-impermeable electrically conductive member include dense carbon obtained by compressing a resin material, such as a thermosetting resin, a thermoplastic resin, and resin fiber, and a carbon material, such as carbon powder and carbon fiber, for gas impermeability, and a pressed metal (for example, titanium, stainless steel, or the like) plate. The shape of the separator may be a rectangle, an oblong hexagon, an oblong octagon, a circle, an oblong circle, or the like.

The area in the plane direction of the air electrode may be equal to or greater than the area in the plane direction of the fuel electrode in the plan view. Specifically, the area in the plane direction of the anode catalyst layer may be equal to the area in the plane direction of the cathode catalyst layer in the plan view or may be greater than the area in the plane direction of the cathode catalyst layer and an edge of the anode catalyst layer may be located outside an edge of the cathode catalyst layer over an entire circumference in the plan view. The area in the plane direction of the electrolyte membrane may be equal to the area in the plane direction of the anode catalyst layer in the plan view.

The area in the plane direction of the anode-side porous channel is greater than the area in the plane direction of the cathode-side porous channel in the plan view. The area in the plane direction of a region of the anode-side porous channel, facing the membrane electrode assembly, may be greater than the area in the plane direction of a region of the cathode-side porous channel, facing the membrane electrode assembly, in the plan view, and an edge of the region of the anode-side porous channel, facing the membrane electrode assembly, may be located outside an edge of the region of the cathode-side porous channel, facing the membrane electrode assembly, over an entire circumference. The area in the plane direction of a region of the anode-side porous channel, not facing the membrane electrode assembly, may be equal to or greater than the area in the plane direction of a region of the cathode-side porous channel, not facing the membrane electrode assembly, in the plan view. In the embodiment of the disclosure, the region of the porous channel, not facing the membrane electrode assembly, is a region from holes serving as manifolds of the water electrolysis cell to the membrane electrode assembly and is a region in which the porous channel is disposed in the plan view. The region of the porous channel, not facing the membrane electrode assembly, is a region of the fluid inlet part or a region of the fluid outlet part. The fluid inlet part and the fluid outlet part are collectively referred to as fluid inlet and outlet parts. The region of the anode-side porous channel, not facing the membrane electrode assembly, is a region from the anode-side supply hole to the membrane electrode assembly and is a region in which the anode-side porous channel is disposed in the plan view, that is, the region of the fluid inlet part, and a region from the anode-side exhaust hole to the membrane electrode assembly and is a region in which the anode-side porous channel is disposed in the plan view, that is, the region of the fluid outlet part. The region of the cathode-side porous channel, not facing the membrane electrode assembly, is a region from the cathode-side supply hole to the membrane electrode assembly and is a region in which the cathode-side porous channel is disposed in the plan view, that is, the region of the fluid inlet part, and a region from the cathode-side exhaust hole to the membrane electrode assembly and is a region in which the cathode-side porous channel is disposed in the plan view, that is, the region of the fluid outlet part. The area in the plane direction of the membrane electrode assembly may be greater than the area in the plane direction of the cathode-side porous channel and may be less than the area in the plane direction of the anode-side porous channel in the plan view. A region of the water electrolysis cell in which the membrane electrode assembly is present may have a pyramid shape.

The area in the plane direction of the anode-side porous channel may be greater than the area in the plane direction of the anode-side gas diffusion layer. The area in the plane direction of the cathode-side porous channel may be less than the area in the plane direction of the cathode-side gas diffusion layer. The area in the plane direction of the anode-side gas diffusion layer may be greater than the area in the plane direction of the cathode-side gas diffusion layer, and an edge of the anode-side gas diffusion layer may be located outside an edge of the cathode-side gas diffusion layer over an entire circumference in the plan view. Specifically, the area in the plane direction of the anode-side gas diffusion layer may be equal to the area in the plane direction of the anode catalyst layer or may be greater than the area in the plane direction of the anode catalyst layer and an edge of the anode-side gas diffusion layer may be located outside an edge of the anode catalyst layer over an entire circumference in the plan view. The area in the plane direction of the cathode catalyst layer may be equal to the area in the plane direction of the cathode-side gas diffusion layer or may be greater than the area in the plane direction of the cathode-side gas diffusion layer, and an edge of the cathode catalyst layer may be located outside an edge of the cathode-side gas diffusion layer over an entire circumference in the plan view.

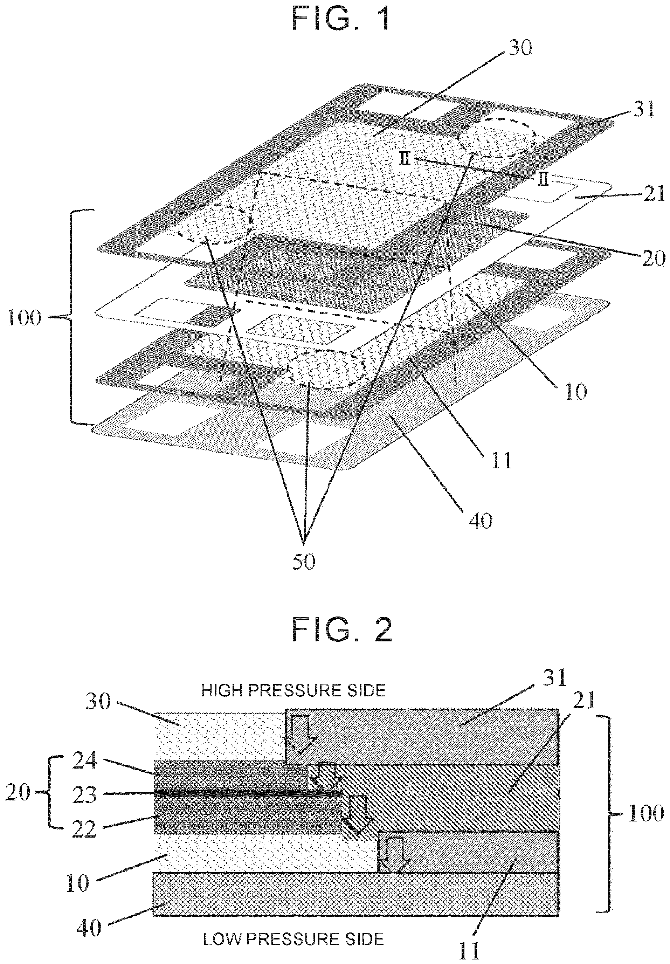

FIG. 1 is a schematic perspective view of an example of the water electrolysis cell according to the embodiment of the disclosure. As shown in FIG. 1, a water electrolysis cell 100 according to the embodiment of the disclosure includes an anode-side porous channel 10, a membrane electrode gas diffusion layer assembly 20, a cathode-side porous channel 30, and an anode separator 40. The water electrolysis cell 100 includes a first frame 11 having a first opening that accommodates the anode-side porous channel 10, a second frame 21 having a second opening that accommodates the membrane electrode gas diffusion layer assembly 20, and a third frame 31 having a third opening that accommodates the cathode-side porous channel 30. The anode-side porous channel 10 and the cathode-side porous channel 30 are also disposed in regions of fluid inlet and outlet parts 50 that are regions indicated by dashed circles in FIG. 1.

FIG. 2 is a schematic sectional view of the water electrolysis cell, taken along the line II-IIin FIG. 1. In FIG. 2, like reference numerals denote the same components as those of FIG. 1, and the description thereof is omitted. The membrane electrode gas diffusion layer assembly 20 has an anode-side gas diffusion layer 22, a membrane electrode assembly 23, and a cathode-side gas diffusion layer 24. As shown in FIG. 1 and FIG. 2, the area in the plane direction of each constituent member reduces in order of the anode-side porous channel 10, the anode-side gas diffusion layer 22, the membrane electrode assembly 23, the cathode-side gas diffusion layer 24, and the cathode-side porous channel 30, and the water electrolysis cell 100 has a pyramid shape in a region in which the membrane electrode assembly 23 is disposed. Thus, a gap between the constituent members is minimized, so a differential pressure stress generated at the gap is reduced. Since no gap is provided on the air electrode side where the pressure is low, engagement of a member in the gap from the fuel electrode side where the pressure is high to the air electrode side where the pressure is low is reduced, with the result that pressure resistance is improved.

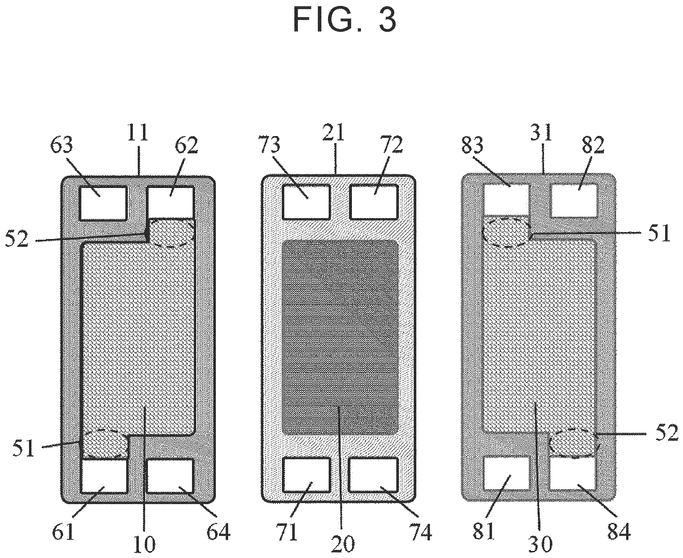

FIG. 3 is a schematic plan view of an example of some of constituent members of the water electrolysis cell according to the embodiment of the disclosure. In FIG. 3, like reference numerals denote the same components as those of FIG. 1, and the description thereof is omitted. The first frame 11 has a first anode-side supply hole 61, a first anode-side exhaust hole 62, a first cathode-side supply hole 63, and a first cathode-side exhaust hole 64. The second frame 21 has a second anode-side supply hole 71, a second anode-side exhaust hole 72, a second cathode-side supply hole 73, and a second cathode-side exhaust hole 74. The third frame 31 has a third anode-side supply hole 81, a third anode-side exhaust hole 82, a third cathode-side supply hole 83, and a third cathode-side exhaust hole 84. The first anode-side supply hole 61 of the first frame 11, the first opening that accommodates the anode-side porous channel 10, and the first anode-side exhaust hole 62 communicate with one another in the plane direction to form one communication hole. The third cathode-side supply hole 83 of the third frame 31, the third opening that accommodates the cathode-side porous channel 30, and the third cathode-side exhaust hole 84 communicate with one another in the plane direction to form one communication hole. The anode-side porous channel 10 and the cathode-side porous channel 30 are disposed in a region of the fluid inlet part 51 and a region of the fluid outlet part 52, which are regions indicated by the dashed circles. The anode-side porous channel 10 connects the first anode-side supply hole 61 of the first frame 11 with the first anode-side exhaust hole 62 of the first frame 11. The cathode-side porous channel 30 connects the third cathode-side supply hole 83 of the third frame 31 with the third cathode-side exhaust hole 84 of the third frame 31.

## Claims

1. A water electrolysis cell (100) comprising:
an anode-side porous channel (10);
a membrane electrode assembly (23);
a cathode-side porous channel (30); and
a separator (40) disposed on at least any one of a side of the anode-side porous channel (10) opposite to the membrane electrode assembly (23) side and a side of the cathode-side porous channel (30) opposite to the membrane electrode assembly (23) side, wherein:
the anode-side porous channel (10), the membrane electrode assembly (23), and the cathode-side porous channel (30) are provided in this order;
the membrane electrode assembly (23) includes an anode catalyst layer, an electrolyte membrane, and a cathode catalyst layer in order from the anode-side porous channel (10) side; and
an area in a plane direction of the anode-side porous channel (10) is greater than an area in the plane direction of the cathode-side porous channel (30) in a plan view.

2. The water electrolysis cell (100) according to claim 1, further comprising an anode-side supply hole (61, 71, 81), a cathode-side supply hole (63, 73, 83), an anode-side exhaust hole (62, 72, 82), and a cathode-side exhaust hole (64, 74, 84) at ends in the plane direction and in a region in which the membrane electrode assembly (23) is not present in the plan view, wherein:
the anode-side porous channel (10) connects the anode-side supply hole (61, 71, 81) with the anode-side exhaust hole (62, 72, 82); and
the cathode-side porous channel (30) connects the cathode-side supply hole (63, 73, 83) with the cathode-side exhaust hole (64, 74, 84).

3. The water electrolysis cell (100) according to claim 1, further comprising:
a first frame (11) having a first opening that accommodates the anode-side porous channel (10);
a second frame (21) having a second opening that accommodates the membrane electrode assembly (23); and
a third frame (31) having a third opening that accommodates the cathode-side porous channel (30), wherein:
the first frame (11) has a first anode-side supply hole (61), a first cathode-side supply hole (63), a first anode-side exhaust hole (62), and a first cathode-side exhaust hole (64) at ends in the plane direction and in a region in which the membrane electrode assembly (23) is not present in the plan view;
the second frame (21) has a second anode-side supply hole (71), a second cathode-side supply hole (73), a second anode-side exhaust hole (72), and a second cathode-side exhaust hole (74) at the ends in the plane direction and in the region in which the membrane electrode assembly (23) is not present in the plan view;
the third frame (31) has a third anode-side supply hole (81), a third cathode-side supply hole (83), a third anode-side exhaust hole (82), and a third cathode-side exhaust hole (84) at the ends in the plane direction and in the region in which the membrane electrode assembly (23) is not present in the plan view;
the anode-side porous channel (10) connects the first anode-side supply hole (61) of the first frame (11) with the first anode-side exhaust hole (62) of the first frame (11) in the plan view; and
the cathode-side porous channel (30) connects the third cathode-side supply hole (83) of the third frame (31) with the third cathode-side exhaust hole (84) of the third frame (31) in the plan view.

4. The water electrolysis cell (100) according to any one of claims 1 to 3, wherein the anode-side porous channel (10) and the cathode-side porous channel (30) each are made up of a metal porous member.

5. The water electrolysis cell (100) according to any one of claims 1 to 4, further comprising:
an anode-side gas diffusion layer (22) disposed between the anode-side porous channel (10) and the anode catalyst layer; and
a cathode-side gas diffusion layer (24) disposed between the cathode-side porous channel (30) and the cathode catalyst layer, wherein:
the area in the plane direction of the anode-side porous channel (10) is greater than an area in the plane direction of the anode-side gas diffusion layer (22);
the area in the plane direction of the cathode-side porous channel (30) is less than an area in the plane direction of the cathode-side gas diffusion layer (24); and
the area in the plane direction of the anode-side gas diffusion layer (22) is greater than the area in the plane direction of the cathode-side gas diffusion layer (24), and an edge of the anode-side gas diffusion layer (22) is located outside an edge of the cathode-side gas diffusion layer (24) over an entire circumference in the plan view.
